# EUROPÄISCHE PATENTSCHRIFT

(11) **EP 2 619 421 B1**
(45) Veröffentlichungstag und Bekanntmachung des Hinweises auf die Patenterteilung: **01.03.2017**
(21) Anmeldenummer: 11770341.3
(22) Anmeldetag: 15.09.2011
(51) Int. Cl.: F01L 1/344, F01L 1/053, F16D 1/08

(54) **ROTOR FÜR EINEN NOCKENWELLENVERSTELLER UND NOCKENWELLENVERSTELLSYSTEM**
ROTOR FOR A CAMSHAFT ADJUSTER, AND CAMSHAFT ADJUSTING SYSTEM
ROTOR POUR UN DÉPHASEUR D'ARBRE À CAMES ET SYSTÈME DE DÉPHASAGE D'ARBRE À CAMES

(30) Priorität: 25.09.2010 DE 102010046619
(43) Veröffentlichungstag der Anmeldung: 31.07.2013
(73) Patentinhaber: Schaeffler Technologies AG & Co. KG, 91074 Herzogenaurach (DE); Bayerische Motoren Werke Aktiengesellschaft, 80809 München (DE)
(72) Erfinder: LANDERSDORFER, Ulrich, 85368 Moosburg (DE); BRAUN, Armin, 96155 Buttenheim (DE)
(74) Vertreter: FDST Patentanwälte
(86) Internationale Anmeldenummer: PCT/EP2011/004632
(87) Internationale Veröffentlichungsnummer: WO 2012/038048

(56) Entgegenhaltungen:
- EP-A2- 1 471 215
- DE-A1- 10 027 517
- DE-A1-102004 019 190
- DE-A1-102008 032 949
- DE-A1-102008 050 134
- DE-B- 1 199 545
- JP-A- 9 280 020

## Beschreibung

### Gebiet der Erfindung

Die Erfindung betrifft einen Rotor für einen Nockenwellenversteller mit einem im Wesentlichen ringförmigen Rotorgrundkörper, der eine Stirnfläche zur axialen Anbindung an eine Nockenwelle aufweist. Weiterhin betrifft die Erfindung ein Nockenwellenverstellsystem mit einem solchen Rotor.

### Hintergrund der Erfindung

Ein Rotor dient als Teil eines Nockenwellenverstellsystems der gezielten Verstellung der Phasenlage zwischen einer Nockenwelle und einer Kurbelwelle in einer Brennkraftmaschine. Hierzu ist der Rotor üblicherweise in einem drehfest mit der Kurbelwelle verbundenen Stator gehalten. Eine solche drehfeste Verbindung ist eine Voraussetzung für die störungsfreie Funktion eines Nockenwellenverstellers.

Zur Gewährleistung einer solchen sicheren Verbindung zwischen einem Nockenwellenversteller und einer Nockenwelle ist eine spielfreie Anbindung des Rotors an die Nockenwelle notwendig. Auf diese Weise kann die sichere Übertragung des Drehmoments der Kurbelwelle auf die Nockenwelle gewährleistet werden. Die Anbindung kann beispielsweise über eine Zentralschraube erfolgen, welche den Rotor und die Nockenwelle kraftschlüssig aneinander fixiert. Die hierbei übertragenen Kräfte und Drehmomente werden im Wesentlichen durch die Reibung zwischen den miteinander verbundenen Flächen der Bauteile bewirkt. Um diese Reibung zu erhöhen, können zusätzlich Reibscheiben zwischen den jeweiligen Kontaktflächen eingesetzt werden.

Hierbei muss der Schraubverband sehr hohe Vorspannkräfte aufweisen, um das von der Kurbelwelle zu übertragende Drehmoment sicher und spielfrei in die Nockenwelle einzuleiten. Dies bedingt beispielsweise eine erhöhte Materialstärke der Bauteile. Weiterhin muss bei einer Verwendung zusätzlicher Reibscheiben die Gefahr eines eventuellen Mehrfachverbaus berücksichtigt werden.

Aus der EP 1 471 215 A2 ist ein Nockenwellenversteller bekannt, wobei die Nockenwelle einen Form- und/oder Kraftschlussteil aufweist, auf dem der Rotor mit einem Grundkörper drehfest sitzt. Das Form- und/oder Kraftschlussteil weist insbesondere eine unrunde Form auf, auf der der Grundkörper des Rotors mittels eines Presssitzes befestigt ist.

In der DE 10 2008 032 949 A1 wird ein Nockenwellenversteller vorgeschlagen, wobei der Rotor als Formschlusselement im Bereich der Anlagefläche der Nockenwelle eine axiale Ausbuchtung umfasst, in die ein Gegenformschlusselement an der Stirmfläche der Nockenwelle eingreift.

### Aufgabe der Erfindung

Es ist demnach eine erste Aufgabe der Erfindung, einen gegenüber dem Stand der Technik verbesserten Rotor anzugeben, der eine kostenneutrale und fertigungstechnisch leicht umsetzbare Möglichkeit zur Zentrierung an einer Nockenwelle ermöglicht.

Eine zweite Aufgabe der Erfindung ist es, ein Nockenwellenverstellsystem mit einem vorgenannten Rotor anzugeben.

### Lösung der Aufgabe

Die erste Aufgabe der Erfindung wird erfindungsgemäß gelöst durch einen Rotor für einen Nockenwellenversteller mit einem im Wesentlichen ringförmigen Rotorgrundkörper, der eine Stirnfläche mit einer sich in einer axialen Richtung erstreckenden Kontur zur axialen Anbindung an eine Nockenwelle aufweist. Hierbei ist vorgesehen, dass die Kontur eine Asymmetrie derart aufweist, dass genau eine Position zur axialen Anbindung des Rotorgrundkörpers an eine Nockenwelle vorgegeben ist. Dazu ist die Kontur mit einer Anzahl einzelner Vertiefungen ausgebildet, die asymmetrisch mit wechselnden Winkelabständen über den Innenumfang des Rotorgrundkörpers verteilt sind.

Die Erfindung berücksichtigt, dass eine sichere Anbindung eines Rotors bzw. eines Nockenwellenverstellers an eine Nockenwelle notwendig ist, um die störungsfreie Funktion eines Nockenwellenverstellsystems zu gewährleisten. Hierbei ist es wichtig, dass die Drehmomente der Kurbelwelle sicher und spielfrei in die Nockenwelle eingeleitet werden. Die hierzu zur Verfügung stehenden Möglichkeiten, wie beispielsweise ein vorgespannter Schraubverband oder die Verwendung von reibungserhöhenden Scheiben, ermöglichen zwar die gewünschte sichere Drehmomentübertragung zwischen den Bauteilen, allerdings ist eine derartige Befestigung aus montage- und fertigungstechnischen Gründen häufig nicht umsetzbar.

Unter Berücksichtigung dessen erkennt die Erfindung, dass eine Befestigung des Rotor und der Nockenwelle aneinander ebenfalls erreicht werden kann, wenn Konturen an Rotor und Nockenwelle angebracht sind, die zur Positionierung der Bauteile zueinander formschlüssig ineinander eingreifen können. Hierdurch lässt sich ebenfalls die erforderliche Drehmomentübertragung der Kurbelwelle auf die Nockenwelle durch einen Formschluss zwischen den Bauteilen erreichen. Zu berücksichtigen ist an dieser Stelle jedoch, dass jeweils eine bestimmte Montageposition des Rotors bzw. des Nockenwellenverstellers an der Nockenwelle vorgesehen ist, die eine lagerichtige Befestigung des Rotors an der Nockenwelle ermöglicht und sicherstellt, dass der Rotor winkelgenau auf der Nockenwelle zu den Nocken ausgerichtet ist.

Grundsätzlich sind bei den bislang bekannten Befestigungsmöglichkeiten jedoch verschiedene Montagepositionen möglich, so dass eine aufwändige Kontrolle hinsichtlich der richtigen Positionierung notwendig ist.

Die Erfindung erkennt hierzu schließlich, dass diese Problematik behoben werden kann, wenn ein Rotor eingesetzt wird, der in einer vorgesehenen Montageposition an einer Nockenwelle befestigt werden kann. Dies wird durch einen Rotor ermöglicht, der an der Stirnfläche seines Grundkörpers eine sich axial erstreckende Kontur aufweist, die asymmetrisch auf der Stirnfläche eingebracht ist, derart, dass genau eine Position zur axialen Anbindung des Rotorgrundkörpers an eine Nockenwelle vorgegeben ist. Diese Ausbildung der Kontur stellt eine Möglichkeit für eine selbstzentrierende und momentübertragende Anbindung eines Rotors an eine Nockenwelle dar.

Die asymmetrische Ausbildung der Kontur ermöglicht hierbei die Anbindung des Rotors an eine Nockenwelle mit entsprechender Gegenkontur in einer definierten Montageposition des Rotors an der Nockenwelle, so dass eine Falschmontage des Rotors nicht möglich ist. Der Rotor kann ohne Hilfselemente winkelgenau zu den Nocken der Nockenwelle ausgerichtet werden. Auf diese Weise kann eine sichere Funktion des Nockenwellenverstellers gewährleistet werden, so dass eine spielfreie und sichere Übertragung der Drehmomente von der Kurbelwelle auf die Nockenwelle gewährleistet ist. Die Betriebssicherheit eines Nockenwellenverstellers ist somit gewährleistet. Weiterhin kann dank der vorgegebene Montageposition auf eine kosten- und zeitaufwändige Überprüfung der richtigen Positionierung des Rotors und damit der Überprüfung der Steuerzeiten am Motor verzichtet werden.

Die Kontur kann in einem Schritt gleichzeitig mit der Herstellung des Rotorgrundkörpers in diesem eingebracht werden. Dies ist beispielsweise bei einer pulvermetallurgischen Herstellung wie einem Sinterprozess möglich.

Die Kontur ist mit einer Anzahl einzelner Vertiefungen ausgebildet, die asymmetrisch mit wechselnden Winkelabständen über den Innenumfang des Rotorgrundkörpers verteilt sind. Die einzelnen Vertiefungen sind hierbei voneinander beabstandet jeweils einzeln am Innenumfang des Rotorgrundkörpers eingebracht. Der Abstand zwischen den Vertiefungen ist variabel wählbar und mit einer Gegenkontur einer Nockenwelle abgestimmt. Die Vertiefungen können sich in der Stirnfläche radial nach außen erstrecken, wobei sie je nach Ausgestaltung und Einsatzgebiet unterschiedlich weit in die Stirnfläche hineinragen können. Die Vertiefungen können sich weiterhin auch in axialer Richtung verschieden weit in dem den Rotor erstrecken.

Der Rotor selbst ist mit einem im Wesentlichen kreisförmigen Grundkörper ausgebildet, an dem Rotorflügel angeordnet sind. Die Anzahl der Rotorflügel ist in Abhängigkeit des einzustellenden Verstellwinkels variabel. Grundsätzlich gilt hierbei, dass je mehr Rotorflügel an einem Rotorgrundkörper angeordnet sind, desto geringer der einstellbare Verstellwinkel ist. Die Rotorflügel können an dem Rotorgrundkörper als separate Komponenten angebracht sein oder bevorzugt einteilig, insbesondere in einem Sinterverfahren, mit diesem hergestellt sei, so dass zur Fertigung des Rotors nur ein Prozessschritt notwendig ist. Die Rotorflügel erstrecken sich in radialer Richtung, so dass sie im eingebauten Zustand mit ihren Flügelenden am Innenumfang bzw. an der inneren Mantelfläche eines Stators anliegen. Die Flügelenden erstrecken sich in Umfangsrichtung vorzugsweise mit einem den Innenradius des Stators entsprechenden äußeren Radius, um im Betrieb beispielsweise ein Verkanten der Flügelenden an der inneren Mantelfläche des Stators zu vermeiden.

In einer vorteilhaften Ausgestaltung der Erfindung ist die Kontur mit einer Anzahl einzelner Vertiefungen ausgebildet, die asymmetrisch mit wechselnden Winkelabständen in der Stirnfläche des Rotorgrundkörpers eingebettet sind. Durch die wechselnden Winkelabstände ist eine asymmetrische, also nicht drehsymmetrische Verteilung der Vertiefungen über den Umfang der Stirnfläche gegeben, wodurch nur eine Montageposition für den Rotor an der Nockenwelle zur Verfügung steht. Die Einbettung der Kontur bzw. der Vertiefungen der Kontur in der Stirnfläche, die bevorzugt beidseitig in radialer Richtung gegeben ist, wird weiterhin eine ausreichende Stabilität beim Eingriff in eine Gegenkontur gewährleistet. Die einzelnen Vertiefungen können sich, wie bereits vorhergehend erläutert, ebenfalls unterschiedlich weit in den Rotorgrundkörper erstrecken.

Bevorzugt weisen die Vertiefungen bezüglich der radialen und/oder der axialen Richtung schräg zulaufende Kontaktflächen auf. Die Kontaktflächen dienen der Anlage der Kontaktflächen der Gegenkontur einer Nockenwelle im montierten Zustand. Der Grad der Schräge der Kontaktflächen ist hierbei sowohl in axialer als auch in radialer Richtung variabel. Insgesamt erlaubt die schräge Auslegung der Kontaktflächen eine Selbstzentrierung des Rotors an der Nockenwelle sowie eine Momentübertragung zwischen einer Kurbelwelle und einer Nockenwelle über den formschlüssigen Eingriff der Gegenkontur in die Kontur. Diese Momentübertragung erlaubt die Übertragung großer Kräfte und Drehmomente mit hohem Wirkungsgrad bei verhältnismäßig niedriger Vorspannkraft.

Zweckmäßigerweise ist in der Stirnfläche des Rotorgrundkörpers wenigstens eine die Kontur umlaufende Ringfläche zur Abdichtung des Nockenwellenverstellers ausgebildet. Grundsätzlich kann jede Ausgestaltung der Stirnfläche, unabhängig von der Form der Kontur, eine Ringfläche umfassen. Ringflächen ergeben sich hierbei insbesondere durch die Einbettung der Kontur in der Stirnfläche zwischen dem Außendurchmesser des Rotorgrundkörpers und dessen Innendurchmesser. Die Ringflächen können zur Abdichtung gegen externe Leckage von Hydraulikflüssigkeit aus dem Nockenwellenversteller eingesetzt werden. Die Ringflächen können eben oder auch als Nuten ausgebildet sein, in die beispielsweise Dichtelemente eingesetzt werden können. Durch diese Ausgestaltung kann im eingebauten Zustand zwischen der Stirnfläche des Rotors und der Anlagefläche einer Nockenwelle bzw. der Nockenwellenversteller gegen Leckage abgedichtet werden.

In einer weiter vorteilhaften Ausgestaltung der Erfindung ist die Kontur mit einer Anzahl einzelner Vertiefungen als eine unterbrochene Hirth-Verzahnung ausgebildet. Die Hirth-Verzahnung ist eine axial wirksame Stirnverzahnung, durch die sich Bauteile hochfest miteinander verbinden lassen. Die Verbindung kommt durch Formschluss zwischen den ineinandergreifenden Zähnen zweier Bauteile zustande. Die Zähne der zu verbindende Bauteile sind üblicherweise konisch ausgebildet und liegen im Sinne einer kraftschlüssigen Kupplung statisch und flächig aneinander an. Die Zähne sind radial angeordnet und zentrieren die zu verbindenden Bauteile. So lassen sich insbesondere hohe Drehmomente verschleißfest übertragen und zusätzlich eine hohe Betriebssicherheit gewährleisten. Vorliegend ermöglicht sie eine Zentrierung des Rotors an der Nockenwelle und so eine Fixierung in seiner axialen Lage. Durch die unterbrochene Ausgestaltung, also den Wegfall von Vertiefungen oder durch unterschiedliche Zahnteilungen kann ebenfalls eine Falschmontage des Rotors an der Nockenwelle ausgeschlossen werden. Die Betriebssicherheit des Nockenwellenverstellers bzw. des Nockenwellenverstellsystems kann entsprechend gewährleistet werden.

Die zweite Aufgabe der Erfindung wird erfindungsgemäß gelöst durch ein Nockenwellenverstellsystem für eine Brennkraftmaschine, umfassend einen Rotor nach einer der vorgenannten Ausgestaltungen, sowie eine Nockenwelle. Hierbei weist die Nockenwelle an ihrer Stirnseite eine Gegenkontur auf, über die die Kontur des Rotors formschlüssig mit der Nockenwelle verbunden ist. Die formschlüssige Verbindung kann besonders hohe Kräfte übertragen und lässt sich beispielsweise bei einer Demontage oder einem eventuell notwendigen Austausch des Rotors relativ problemlos demontieren.

Wie vorhergehend bereits beschrieben, ermöglicht ein derartiges Nockenwellenverstellsystem eine formschlüssige Befestigung von Nockenwelle und Rotor aneinander in einer vorgegebenen Position. Durch die asymmetrische Ausgestaltung der Kontur, sowohl in der Stirnfläche des Rotorgrundkörpers als auch in der entsprechenden Gegenkontur an der Nockenwelle, ist eine Falschmontage des Rotors bzw. des Nockenwellenverstellers nicht möglich. Aufgrund der sicheren Befestigung ist der Rotor axial an der Nockenwelle positioniert und ermöglicht so eine spielfreie und sichere Übertragung der Drehmomente von der Kurbelwelle auf die Nockenwelle.

In einem Verbrennungsmotor mit jeweils einem Nockenwellenverstellsystem für Einlass- und Auslassnocken wird in besonders vorteilhafter Weise eine unterschiedliche Ausbildung des Formschlusses für den Einlassversteller im Vergleich zum Auslassversteller so gewählt, dass es nicht zu einer fehlerhaften Vertauschung der Versteller bei der Montage kommen kann. Z. B. kann die Zahnform, die Anzahl oder Lage der Zähne oder die Durchmesser unterschiedlich gestaltet sein.

Die Gegenkontur der Nockenwelle ist bevorzugt an einer Stirnseite der Nockenwelle ausgebildet. Sie ist derart ausgestaltet, dass sie sich zur Befestigung an der Kontur des Rotors eignet. Beispielsweise ist bei einer Kontur, die mit einzelnen Vertiefungen ausgebildet ist, die Gegenkontur entsprechend erhaben ausgebildet. Alternativ ist grundsätzlich auch die umgekehrte Variante möglich, bei der die Kontur des Rotors beispielsweise in Form von Noppen ausgebildet ist, die in die Gegenkontur einer Nockenwelle eingreifen.

Der Rotor ist Teil eines Nockenwellenverstellers, der ebenfalls einen Stator umfasst, welcher wiederum drehfest mit der Kurbelwelle verbunden ist. Der Rotor ist in dem Stator gehalten. Der Stator weist hierzu üblicherweise eine Anzahl sich radial nach innen erstreckender Stege auf, zwischen denen Druckkammern gebildet sind. In die Druckkammern können die sich radial nach außen erstreckenden Flügel des Rotors positioniert werden, so dass jeweils an den Außenseiten der Flügel die Hydraulikbereiche zur Beaufschlagung mit einem Hydraulikmedium entstehen.

Der Nockenwellenversteller ist neben einem Stator und einem Rotor üblicherweise noch mit einem Dichtdeckel sowie mit einem Verriegelungsdeckel ausgebildet. Der Verriegelungsdeckel ist vorzugsweise mit dem Stator verbunden und begrenzt die Druckkammern nockenwellenseitig. Er dient der Abdichtung des Druckraumes nach außen hin und verhindert auf diese Weise ein kontrolliertes Auslaufen von Hydraulikmedium. Hierdurch wird auch die externe Leckage eines Nockenwellenverstellers verringert. In dem Verriegelungsdeckel ist üblicherweise eine Kulisse ausgebildet, die dem Eingriff eines Verriegelungskolbens dient, und somit der festen Positionierung von Stator und Rotor in einer vorhergesehenen Position.

In einer vorteilhaften Ausgestaltung der Erfindung weist die Gegenkontur der Nockenwelle eine Anzahl von sich axial erstreckenden einzelnen Erhebungen auf, die in die Vertiefungen des Rotors eingreifen. Die Erhebungen haben auf dem Umfang der Nockenwelle den gleichen Abstand voneinander wie die Vertiefungen in der Stirnfläche des Rotors. Auf diese Weise kann sichergestellt werden, dass der Rotor an genau der hierfür vorgesehenen Nockenwelle in einer vorbestimmten Position befestigt wird.

In einer weiter vorteilhaften Ausgestaltung der Erfindung ist in der die Kontur umlaufenden Ringfläche ein Dichtelement positioniert, welches gegenüber der Nockenwelle abdichtet. Diese Abdichtung verringert die externe Leckage des Nockenwellenverstellers, verhindert also, dass aus dem Raum zwischen den Rotorflügeln Hydraulikmedium nach außen gelangt. Auf diese Weise kann die sichere Funktion eines Nockenwellenverstellers gewährleistet werden.

Zweckmäßigerweise ist ein Adapterring umfasst, über den die Kontur des Rotors formschlüssig mit der Nockenwelle verbunden ist. Ein Adapterring ermöglicht die Anbringung des Rotors an unterschiedlich ausgebildeten Nockenwellen. Er ist vorzugsweise mit einer Gegenkontur ausgebildet, die mit der Kontur eines zu befestigenden Rotors verbunden werden kann. Der Adapterring kann hierzu auf das Ende der Nockenwelle, vorzugsweise an einer Stirnseite aufgeschoben und dort beispielsweise verklebt oder verschweißt werden. Eine Anpassung einer Nockenwelle an einen anzubringenden Rotor kann entfallen, so dass beispielsweise auch bereits bestehende Systeme auf einfache Weise umgerüstet werden können.

Weitere vorteilhafte Ausgestaltungen finden sich in den auf den Rotor gerichteten Unteransprüchen, die sinngemäß auf das Nockenwellenverstellsystem übertragen werden können.

### Kurze Beschreibung der Zeichnung

Im Folgenden werden Ausführungsbeispiele der Erfindung anhand einer Zeichnung näher erläuter. Dabei zeigen:
- Fig. 1: einen Rotor mit einer Kontur am Innenumfang seiner Stirnfläche in einer dreidimensionalen Darstellung,
- Fig. 2: die Stirnseite einer Nockenwelle mit einer Gegenkontur in einer dreidimensionalen Darstellung,
- Fig. 3: einen Ausschnitt eines Nockenwellenverstellsystems in einer dreidimensionalen Darstellung mit dem Rotor gemäß Fig. 1 und der Nockenwelle gemäß Fig. 2,
- Fig. 4: eine Detailansicht einer Kontur des Rotors gemäß Fig. 1 in einer in einer dreidimensionalen Darstellung,
- Fig. 5: einen Querschnitt durch die Eingriffsebene der Gegenkontur der Nockenwelle gemäß Fig. 2 in die Kontur des Rotors gemäß Fig. 1,
- Fig. 6: eine Draufsicht auf einen Rotor,
- Fig. 7: eine Draufsicht auf ein Nockenwellenverstellsystem mit dem Rotor gemäß Fig. 6 und einer Nockenwelle,
- Fig. 8: einen Rotor in einer dreidimensionalen Darstellung mit einer eingebetteten Kontur,
- Fig. 9: den Rotor gemäß Fig. 8 in einer Draufsicht, sowie
- Fig. 10: einen Längsschnitt durch ein Nockenwellenverstellsystem mit einem Dichtelement.

Gleiche Komponenten in den Ausführungsbeispielen erhalten im Folgenden die gleichen Bezugszeichen.

### Ausführliche Beschreibung der Zeichnung

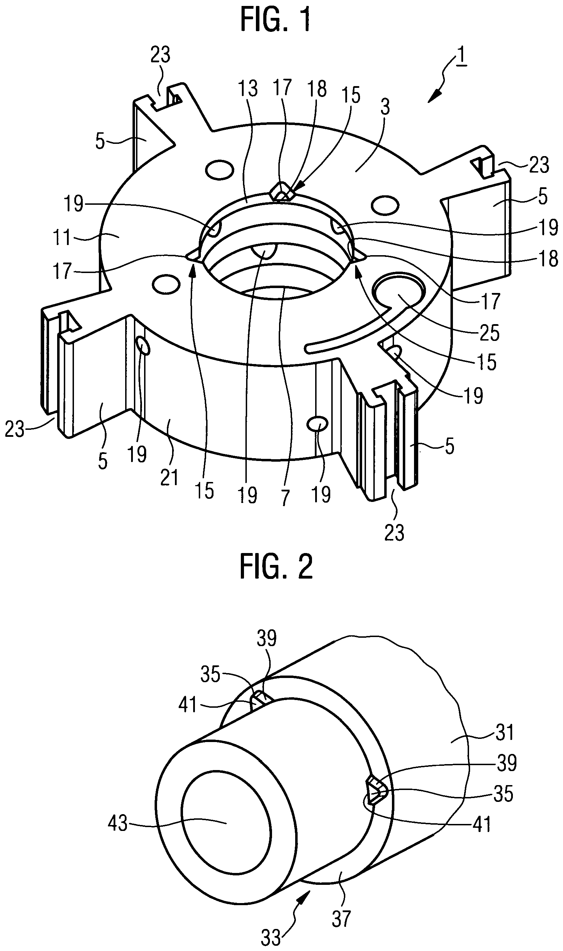

In Fig. 1 ist eine dreidimensionale Darstellung eines Rotors 1 gezeigt. Der Rotor weist einen zylindrischen Rotorgrundkörper 3 und an diesem angeordnete, sich radial nach außen erstreckende Rotorflügel 5 auf. In der Mitte des Rotorgrundkörpers 3 ist eine Öffnung 7 für den Durchtritt einer Nockenwelle eingebracht. Eine Nockenwelle ist in Fig. 2 gezeigt.

An seiner Stirnfläche 11 weist der Rotor 1 am Innenumfang 13 eine sich axial erstreckende Kontur 15 zur axialen formschlüssigen Anbindung an eine Nockenwelle auf. Die Kontur 15 ist in Form von drei Vertiefungen am Innenumfang in die Stirnfläche 11 des Rotors 1 eingebracht und asymmetrisch über den Innenumfang 13 verteilt. Die Asymmetrie der Kontur 15 ist entsprechend derart ausgebildet, dass genau eine Position zur axialen Anbindung des Rotors 1 an eine Nockenwelle möglich ist. Dies wird durch die wechselnden Winkelabstände erreicht, über die die Vertiefungen voneinander beabstandet sind.

Über die Kontur 15 kann der Rotor 1 in einer vorgesehenen Montageposition an einer Nockenwelle mit entsprechender Gegenkontur formschlüssig axial zentriert werden. Dank der asymmetrischen, also nicht drehsymmetrischen Verteilung der Kontur über die Stirnfläche ist eine definierte Montageposition des Rotors 1 an einer Nockenwelle vorgegeben, so dass eine Falschmontage des Rotors 1 ausgeschlossen werden kann.

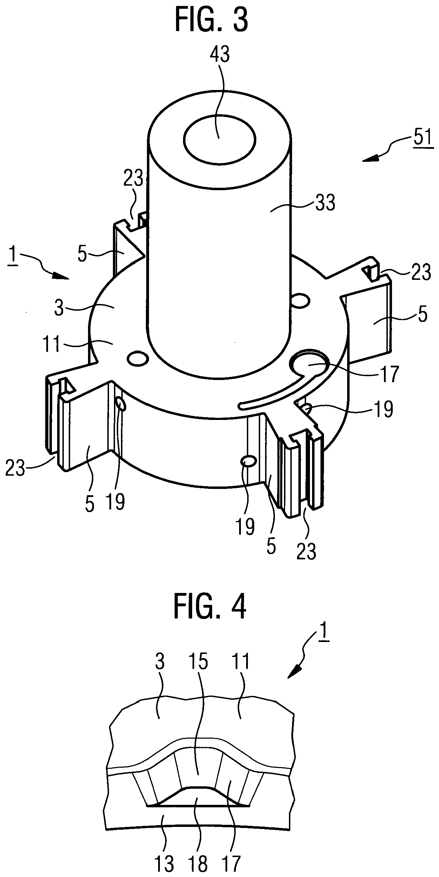

Die Vertiefungen 15 erstrecken sich in der Stirnfläche 11 des Rotorgrundkörpers 3 radial nach außen. Sie weisen sowohl bezüglich der radialen als auch bezüglich der axialen Richtung schräg zulaufende Kontaktflächen 17 zur Selbstzentrierung des Rotors 1 an der Nockenwelle auf. Die Kontaktflächen 17 sind in der Fig. 4 deutlich zu sehen und dort entsprechend detailliert beschrieben. Die Vertiefungen 15 weisen weiterhin jeweils eine in dem Grundkörper ausgebildete Auflagefläche 18 auf, die der Anlage einer Gegenkontur an der Nockenwelle dienen kann.

Weiterhin weist der Rotor 1 eine Anzahl von Öffnungen 19 sowohl an seinem Innenumfang 13 ebenso wie an seinem Außenumfang 21 auf, die der Versorgung des Nockenwellenverstellers mit Hydraulikmedium dienen. Die Rotorflügel 5 sind an ihren Flügelenden mit Vertiefungen 23 ausgebildet, in denen Dichtelemente zur Verringerung der internen Leckage innerhalb eines Nockenwellenverstellers gelagert werden können.

Zusätzlich ist der Rotor 1 in seinem Grundkörper 3 mit einer Verriegelungsbohrung 25 ausgebildet, die der Verriegelung von Rotor 1 und einem Stator im eingebauten Zustand innerhalb des Nockenwellenverstellers dient.

In Fig. 2 ist eine Nockenwelle 31 gezeigt, an der ein Rotor 1 gemäß der Fig. 1 befestigt werden kann. Zur Befestigung ist hierbei an einem Ende 33 der Nockenwelle 31, also an der Stirnseite eine Gegenkontur 35 vorgesehen. Diese Gegenkontur 35 ist in Form von drei Erhebungen an einer ringförmigen Anlagefläche 37 am Nockenwellenende 33 ausgebildet, von denen aufgrund der Darstellung nur zwei zu sehen sind. Die Erhebungen sind, wie auch die Kontur 15 des Rotors 1, über den Umfang der Nockenwelle 31 verteilt. Die Asymmetrie wird durch die wechselnden Winkelabstände erreicht, über die die Erhebungen voneinander beabstandet sind. Die Erhebungen können im montierten Zustand in die Kontur 15 an der Stirnseite 11 des Rotors 1 eingreifen. Diese Ausgestaltung ermögliche genau eine Position des Rotors 1 an der Nockenwelle 31.

Die Erhebungen der Gegenkontur 35 haben entsprechend der Kontur 15 ebenfalls bezüglich der radialen und der axialen Richtung schräg zulaufende Kontaktflächen 39. Weiterhin weisen sie ebenfalls eine Auflagefläche 41 auf, die an der Auflagefläche 18 der Kontur 15 zur Anlage kommen kann. Das Nockenwellenende 33 ist zusätzlich mit einer Öffnung 43 ausgebildet, in die eine nicht gezeigte Zentralschraube eingebracht werden kann, um gemeinsam mit dem Rotor 1 weitere Nockenwellenverstellkomponenten an der Nockenwelle 31 zu befestigen.

Eine montierte Darstellung 51 des Rotors 1 gemäß der Fig. 1 an der Nockenwelle 31 gemäß Fig. 2 kann der Fig. 3 entnommen werden. Hierbei ist der Rotor 1 mit seiner Kontur 15 an der Gegenkontur 35 der Nockenwelle 31 zentriert. Das Nockenwellenende 33 ist durch die Öffnung 7 im Rotor 1 geschoben und kommt mit ihrer ringförmigen Anlagefläche 37 an der Stirnfläche 11 des Rotors zur Anlage. Die Erhebungen der Gegenkontur 35 greifen in die Vertiefungen der Kontur 15 ein und ermöglichen so eine formschlüssige Verbindung der beiden Bauteile. Der Rotor 1 wird vorzugsweise mit einer Mutter an die Nockenwelle 31 angeschraubt. Die Mutter hat dabei bevorzugtermaßen einen elastischen Bereich, z. B. tellerfederartig, wodurch Setzkraftverluste hinreichend aufgefangen werden.

Fig. 4 zeigt die Detailansicht einer Kontur 15 bzw. einer Vertiefung der Kontur 15 gemäß Fig. 1 in einer dreidimensionalen Darstellung. Die Vertiefung 15 ist am Innendurchmesser 13 in den Rotorgrundkörper 3 eingebracht. Deutlich zu erkennen sind die bezüglich der radialen und der axialen Richtung schräg zulaufende Kontaktflächen 17 der Vertiefung 15. Die Kontaktflächen 17 dienen der Anlage der Kontaktflächen der Gegenkontur einer Nockenwelle im montierten Zustand. Durch die Kontaktflächen 17 ist eine Selbstzentrierung des Rotors 1 sowie eine Momentübertragung zwischen einer Kurbelwelle und einer Nockenwelle im montierten Zustand möglich. Die Auflagefläche 18 dient der Anlage der entsprechenden Auflagefläche 41 der Gegenkontur 35.

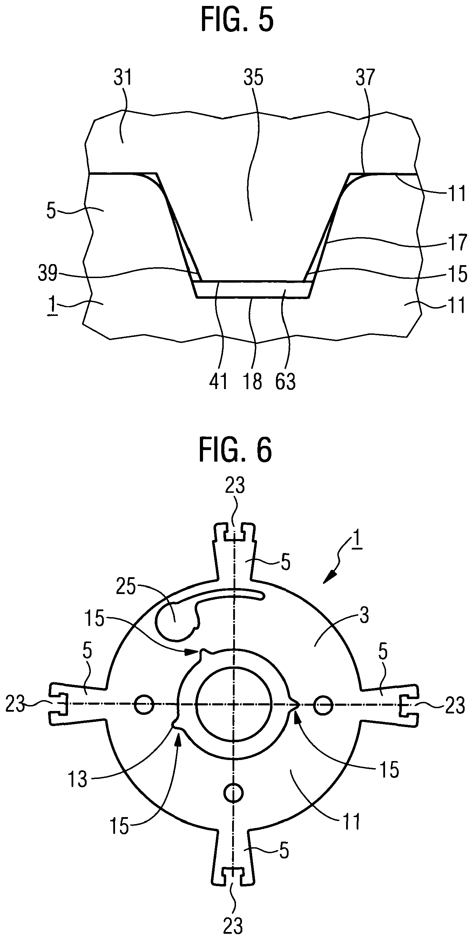

In Fig. 5 ist ein Querschnitt durch die Eingriffsebene eines Rotor 1 gemäß Fig. 1 und einer Nockenwelle 31 gemäß Fig. 2 zu sehen. Die Gegenkontur 35 der Nockenwelle 1 ist in der Kontur 15 des Rotors 1 formschlüssig positioniert. Durch die definierten Kontaktflächen 17, 39 der beiden Komponenten ist eine spielfreie Momentübertragung zwischen Rotor 1 und Nockenwelle 31 und somit zwischen Kurbelwelle und Nockenwelle 31 möglich. Der Raum 63, der zwischen den Auflageflächen 18, 41 ausgebildet ist, ermöglicht eine axiale Ausdehnung der Gegenkontur 35 bei der Befestigung zusätzlicher Nockenwellenverstellkomponenten durch eine Zentralschraube.

In Fig. 6 ist eine Draufsicht auf einen Rotor 1 gemäß Fig. 1 gezeigt, durch den die asymmetrische Verteilung der Vertiefungen über den Innenumfang 13 des Rotorgrundkörpers 3 besonders verdeutlicht wird. Die Vertiefungen sind mit unterschiedlichem Winkelabstand zueinander über den Umfang 13 verteilt. Durch diese asymmetrische, also nicht drehsymmetrische Anordnung kann gewährleistet werden, dass die Montage an einer Nockenwelle 31 nur in einer Position umsetzbar ist.

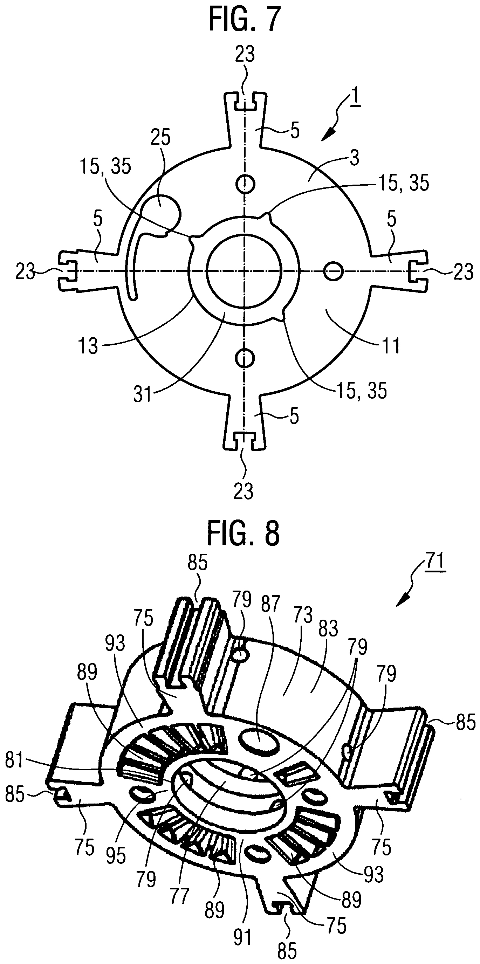

Dies kann der Fig. 7 entnommen werden. Hier ist wie in Fig. 6 eine Draufsicht auf den Rotor 1 gezeigt, der bereits als Teil eines Nockenwellenverstellsystems mit der Nockenwelle 31 verbunden ist. Hierbei ist zu sehen, dass genau eine Positionierung der Nockenwelle 31 an der Stirnseite des Rotors 1 möglich ist. Die Erhebungen 35 am Ende 33 der Nockenwelle 31 sind in den Vertiefungen der Kontur 15 in der Stirnfläche 11 des Rotors positioniert, so dass der Rotor 1 formschlüssig und axial an der Nockenwelle 31 gelagert ist.

In Fig. 8 ist ein weiterer Rotor 71 in einer dreidimensionalen Darstellung mit einem zylindrischen Rotorgrundkörper 73 und an diesem angeordnete, sich radial nach außen erstreckende Rotorflügel 75 auf. In der Mitte des Rotorgrundkörpers 73 ist ebenfalls eine Öffnung 77 für den Durchtritt einer Nockenwelle eingebracht. Wie auch in Fig. 1 weist der Rotor 71 eine Anzahl von Öffnungen 79 auf, die sowohl an seinem Innenumfang 81 ebenso wie an seinem Außenumfang 83 ausgebildet sind und der Versorgung mit Hydraulikmedium dienen.

Die Rotorflügel 75 weisen ebenfalls Vertiefungen 85 an ihren Flügelenden auf, in denen Dichtelemente zur Verringerung der internen Leckage innerhalb eines Nockenwellenverstellers gelagert werden können. Weiterhin weist der Rotor 71 in seinem Grundkörper 73 eine Verriegelungsbohrung 87 zur Verriegelung von Rotor 71 und einem Stator im eingebauten Zustand auf.

Im Unterschied zu Fig. 1 ist im Rotorgrundkörper 73 eine Kontur 89 in der Stirnfläche 91 eingebracht. Die Kontur 89 ist in Form einer unterbrochenen Hirth-Verzahnung in der Stirnfläche 91 eingebracht. Die Hirth-Verzahnung ermöglicht eine präzise Verbindung des Rotors 71 an einer Nockenwelle, was in Fig. 8 nicht gezeigt ist. Man erkennt hier jedoch deutlich, dass die Verzahnung nicht über den ganzen Umfang des Rotors 71 gleichmäßig verteilt ist. Auf diese Weise sind eine Zentrierung des Rotors 91 an einer Nockenwelle und so eine Fixierung in seiner axialen Lage möglich. Durch die unterbrochene Ausgestaltung der Hirth-Verzahnung kann eine Falschmontage ausgeschlossen werden. Der Rotor kann auf diese Weise ohne Hilfselemente winkelgenau zu den Nocken der Nockenwelle ausgerichtet werden.

Die Hirth-Verzahnung ist zwischen am Innenumfang 81 und am Außenumfang 83 eingebetteten Ringflächen 93, 95 ausgebildet. Die Ringflächen 93, 95 dienen der Abdichtung des Ölflusses im montierten Zustand in einem Nockenwellenversteller. Hierzu können beispielsweise Dichtelemente wie O-Ringe verwendet werden, die in die Ringflächen 93, 95 eingebracht oder auf diese aufgelegt werden.

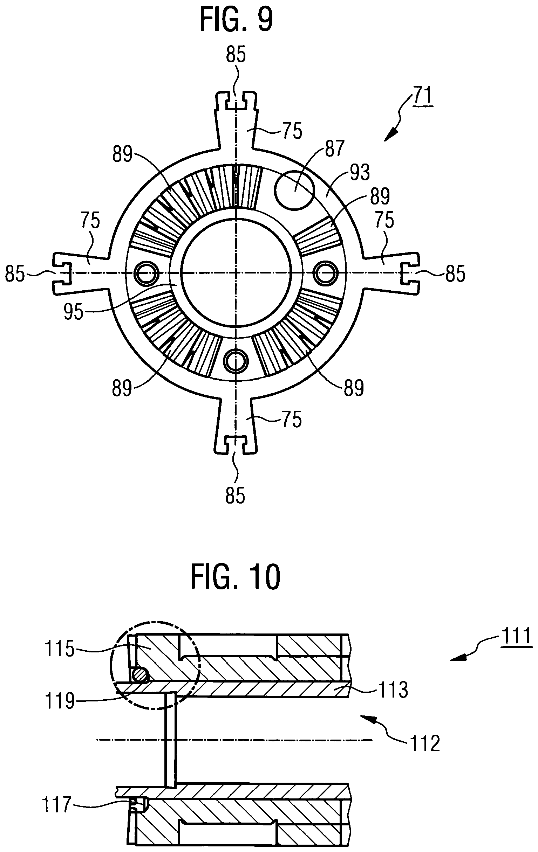

Fig. 9 zeigt eine Draufsicht des Rotors 71 gemäß Fig. 8. Man erkennt deutlich die als unterbrochene Hirth-Verzahnung ausgebildete Kontur 89, die asymmetrisch, mit wechselnden Winkelabständen über die Stirnfläche 91 eingebracht ist. Die Kontur 89 ist in die Stirnfläche 91 zwischen den radial innen und radial außen umlaufenden Ringflächen 93, 95 eingebettet. Der Rotor 71 ist über die Kontur mit einer Gegenkontur am Adapter 115 der Nockenwelle verbunden. Die Gegenkontur ist andeutungsweise im Längsschnitt von Fig. 10 zu sehen.

In Fig. 10 ist ein Längsschnitt durch ein Nockenwellenverstellsystem 111 ohne Nockenwellenversteller gezeigt. Die Nockenwelle 112 setzt sich aus einem Nockenwellenrohr 113 und einem Adapter 115 mit einer Gegenkontur zusammen, in die die Kontur eines Rotors eingreifen kann. Die Gegenkontur des Adapters 115 ist am Innendurchmesser zurückgesetzt und bildet eine Anlagefläche 117 für ein Dichtelement 119. Das Dichtelement 119 dient im eingebauten Zustand zwischen der Stirnfläche eines Rotors und der Anlagefläche 117 der Abdichtung gegen externe Leckage von Hydraulikflüssigkeit aus dem Nockenwellenversteller.

**Liste der Bezugszahlen**

| | | | |
|---|---|---|---|
| 1 | Rotor | 87 | Verriegelungsbohrung |
| 3 | Rotorgrundkörper | 89 | Kontur |
| 5 | Rotorflügel | 91 | Stirnfläche |
| 7 | Öffnung | 93 | äußerer Ringfläche |
| 11 | Stirnfläche | 95 | innere Ringfläche |
| 13 | Innenumfang | 111 | Nockenwellenverstellsystem |
| 15 | Kontur | 112 | Nockenwelle |
| 17 | Kontaktflächen | 113 | Nockenwellenrohr |
| 18 | Auflagefläche | 115 | Adapter mit Gegenkontur |
| 19 | Hydrauliköffnungen | 117 | Anlagefläche |
| 21 | Außenumfang | 119 | Dichtelement |
| 23 | Nut | | |
| 25 | Verriegelungsbohrung | | |
| 31 | Nockenwelle | | |
| 33 | Nockenwellenende | | |
| 35 | Gegenkontur | | |
| 37 | Anlagefläche | | |
| 39 | Kontaktflächen | | |
| 41 | Auflagefläche | | |
| 43 | Bohrung | | |
| 51 | montierte Darstellung | | |
| 63 | Raum | | |
| 71 | Rotor | | |
| 73 | Rotorgrundkörper | | |
| 75 | Rotorflügel | | |
| 77 | Öffnung | | |
| 79 | Hydrauliköffnungen | | |
| 81 | Innenumfang | | |
| 83 | Außenumfang | | |
| 85 | Nut | | |

## Patentansprüche

1. Rotor (1, 71) für einen Nockenwellenversteller, umfassend einen im Wesentlichen ringförmigen Rotorgrundkörper (3, 73), der eine Stirnfläche (11, 91) mit einer sich in einer axialen Richtung erstreckenden Kontur (15, 89) aufweist, wobei die Kontur (15, 89) eine Asymmetrie derart aufweist, dass genau eine Position zur axialen Anbindung des Rotorgrundkörpers (3, 73) an eine Nockenwelle (31, 112) vorgegeben ist, **dadurch gekennzeichnet, dass** die Kontur (15, 89) mit einer Anzahl einzelner Vertiefungen ausgebildet ist, die asymmetrisch mit wechselnden Winkelabständen über den Innenumfang (13, 81) des Rotorgrundkörpers (3, 73) verteilt sind.

2. Rotor (1, 71) nach Anspruch 1,
wobei die Kontur (15, 89) mit einer Anzahl einzelner Vertiefungen ausgebildet ist, die asymmetrisch mit wechselnden Winkelabständen in der Stirnfläche (11, 91) des Rotorgrundkörpers (3, 73) eingebettet sind.

3. Rotor (1, 71) nach Anspruch 1 oder 2,
wobei die Vertiefungen bezüglich der radialen und/oder der axialen Richtung schräg zulaufende Kontaktflächen (17, 39) aufweisen.

4. Rotor (1, 71) nach einem der vorhergehenden Ansprüche,
wobei in der Stirnfläche (11, 91) des Rotorgrundkörpers (3, 73) wenigstens eine die Kontur (15, 89) umlaufende Ringfläche (93, 95, 117) zur Abdichtung des Nockenwellenverstellers ausgebildet ist.

5. Rotor (1, 71) nach einem der vorhergehenden Ansprüche,
wobei die Kontur (15, 89) mit einer Anzahl einzelner Vertiefungen als eine unterbrochene Hirth-Verzahnung ausgebildet ist.

6. Nockenwellenverstellsystem (111) für eine Brennkraftmaschine, umfassend einen Rotor (1, 71) nach einem der Ansprüche 1 bis 5, sowie eine Nockenwelle (31, 112), wobei die Nockenwelle (31, 112) an ihrer Stirnseite eine Gegenkontur (35) aufweist, über die die Kontur (15, 89) des Rotors (1, 71) mit der Nockenwelle (31, 112) formschlüssig verbunden ist.

7. Nockenwellenverstellsystem (111) nach Anspruch 6,
wobei die Gegenkontur (35) der Nockenwelle (31, 112) eine Anzahl von sich axial erstreckenden einzelnen Erhebungen aufweist, die in die Vertiefungen des Rotors (1, 71) eingreifen.

8. Nockenwellenverstellsystem (111) nach Anspruch 6 oder 7,
wobei in einer die Kontur (15, 89) umlaufenden Ringfläche (93, 95, 117) ein Dichtelement (119) positioniert ist, welches gegenüber der Nockenwelle (31, 112) abdichtet.

9. Nockenwellenverstellsystem (111) nach einem der Ansprüche 6 bis 8,
wobei ein Adapter (115) umfasst ist, über den die Kontur (15, 89) des Rotors (1, 71) formschlüssig mit der Nockenwelle (31, 112) verbunden ist.

## Claims

1. Rotor (1, 71) for a camshaft adjustor, comprising a substantially circular rotor base body (3, 73) that has a front face (11, 91) having a contour (15, 89) extending in an axial direction, wherein the contour (15, 89) has an asymmetry in such a way that a position relative to the axial connection of the rotor base body (3, 73) to a camshaft (31, 112) is exactly predetermined, **characterised in that** the contour (15, 89) is formed with a number of individual indentations that are distributed asymmetrically across the inner periphery (13, 81) of the rotor base body (3, 73) with varying angular distances.

2. Rotor (1, 71) according to claim 1,
wherein the contour (15, 89) is formed with a number of individual indentations that are embedded asymmetrically in the front face (11, 91) of the rotor base body (3, 73) with varying angular distances.

3. Rotor (1, 71) according to claim 1 or 2,
wherein the indentations have slanted running contact surfaces (17, 39) relative to the radial and/or axial direction.

4. Rotor (1, 71) according to one of the preceding claims,
wherein at least one ring face (93, 95, 117) running around the contour (15, 89) is formed in the front face (11, 91) of the rotor base body (3, 73) to seal the camshaft adjustor.

5. Rotor (1, 71) according to one of the preceding claims,
wherein the contour (15, 89) is formed as an interrupted Hirth gearing having a number of indentations.

6. Camshaft adjusting system (111) for an internal combustion engine, comprising a rotor (1, 71) according to one of claims 1 to 5, and a camshaft (31, 112), wherein the camshaft (31, 112) has a counter-contour (35) on its front side, the contour (15, 89) of the rotor (1, 71) being positively connected to the camshaft (31, 112) via said counter-contour.

7. Camshaft adjusting system (111) according to claim 6,
wherein the counter-contour (35) of the camshaft (31, 112) has a number of individual elevations extending axially, said elevations engaging with the indentations of the rotor (1, 71).

8. Camshaft adjusting system (111) according to claim 6 or 7,
wherein a sealing element (119) is positioned in a ring face (93, 95, 117) running around the contour (15, 89), said sealing element sealing opposite the camshaft (31, 112).

9. Camshaft adjusting system (111) according to one of claims 6 to 8,
wherein an adaptor (115) is included, via which the contour (15, 89) of the rotor (1, 71) is positively connected to the camshaft (31, 112).

## Revendications

1. Rotor (1, 71) pour un déphaseur d'arbre à cames, comprenant un corps de base de rotor (3, 73) sensiblement de forme annulaire, qui présente une surface frontale (11, 91) avec un contour (15, 89) s'étendant dans la direction axiale, le contour (15, 89) présentant une asymétrie de manière telle que soit prédéfinie exactement une position pour l'attachement axial du corps de base de rotor (3, 73) à un arbre à cames (31, 112), **caractérisé en ce que** le contour (15, 89) est réalisé de manière à comporter un certain nombre de creux individuels, qui sont répartis de manière asymétrique, avec des espacements angulaires variables, le long de la périphérie intérieure (13, 81) du corps de base de rotor (3, 73).

2. Rotor (1, 71) selon la revendication 1,
dans lequel le contour (15, 89) est réalisé de manière à comporter un certain nombre de creux individuels, qui sont encastrés de manière asymétrique, avec des espacements angulaires variables, dans la surface frontale (11, 91) du corps de base de rotor (3, 73).

3. Rotor (1, 71) selon la revendication 1 ou la revendication 2,
dans lequel les creux présentent des surfaces de contact (17, 39) qui convergent mutuellement de manière inclinée par rapport à la direction radiale et/ou axiale.

4. Rotor (1, 71) selon l'une des revendications précédentes,
dans lequel dans la surface frontale (11, 91) du corps de base de rotor (3, 73), est formée au moins une surface annulaire (93, 95, 117) entourant le contour (15, 89), en vue d'assurer l'étanchéité du déphaseur d'arbre à cames.

5. Rotor (1, 71) selon l'une des revendications précédentes,
dans lequel le contour (15, 89) est réalisé de manière à comporter un certain nombre de creux individuels sous la forme d'une denture plane de Hirth interrompue.

6. Système de déphasage d'arbre à cames (111) pour un moteur à combustion interne, comprenant un rotor (1, 71) selon l'une des revendications 1 à 5, ainsi qu'un arbre à cames (31, 112), système dans lequel l'arbre à cames (31, 112) présente sur son côté frontal, un contour conjugué (35), par l'intermédiaire duquel le contour (15, 89) du rotor (1, 71) est relié par complémentarité de formes à l'arbre à cames (31, 112).

7. Système de déphasage d'arbre à cames (111) selon la revendication 6,
dans lequel le contour conjugué (35) de l'arbre à cames (31, 112) comporte un certain nombre de proéminences individuelles s'étendant axialement, qui viennent en prise dans les creux du rotor (1, 71).

8. Système de déphasage d'arbre à cames (111) selon la revendication 6 ou la revendication 7,
dans lequel dans une surface annulaire (93, 95, 117) entourant le contour (15, 89), est positionné un élément d'étanchéité (119), qui assure l'étanchéité par rapport à l'arbre à cames (31, 112).

9. Système de déphasage d'arbre à cames (111) selon l'une des revendications 6 à 8,
dans lequel est prévu un adaptateur (115) par l'intermédiaire duquel le contour (15, 89) du rotor (1, 71) est relié par complémentarité de formes avec l'arbre à cames (31, 112).
